# EUROPEAN PATENT APPLICATION

(11) **EP 4 703 293 A1**
(43) Date of publication of application: **04.03.2026**
(21) Application number: 24196959.1
(22) Date of filing: 28.08.2024
(51) Int. Cl.: B65G 1/04, B65G 1/06

(54) **A VEHICLE FOR A CONTAINER STORAGE AND RETRIEVAL SYSTEM**

(71) Applicant: AutoStore Technology AS, 5578 Nedre Vats (NO)
(72) Inventor: Ragnar, STUHAUG, 5578 Nedre Vats (NO)
(74) Representative: Kilburn & Strode LLP

(57) **Abstract**

A vehicle (802) for a container storage and retrieval system, the vehicle configured to traverse a grid of rails having rails arranged perpendicular to a first direction and rails arranged perpendicular to a second direction, and corresponding systems and methods. The vehicle comprises a vehicle body (300). The vehicle also comprises a first set of continuous tracks (808) for propelling the vehicle in the first direction, wherein each continuous track of the first set comprises a tread and one or more first protrusion (834) for engaging rails arranged perpendicular to the first direction, such that the first set of continuous tracks is configured to have least two points of contact with the rails arranged perpendicular to the first direction when traversing the grid of rails. The vehicle also comprises a second set of continuous tracks (810) for propelling the vehicle in the second direction, wherein each continuous track of the second set comprises a tread and one or more second protrusion (834) for engaging rails arranged perpendicular to the second direction, such that the second set of continuous tracks is configured to have least two points of contact with the rails arranged perpendicular to the second direction when traversing the grid of rails.

## Description

### TECHNICAL FIELD

The disclosure relates to a vehicle for a container storage and retrieval system. More particularly, it relates to a vehicle for a traversing grid of rails using continuous tracks, and corresponding systems and methods.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A significant factor in the speed and efficiency of an automated storage and retrieval system is how the robots move across the rail system, e.g., optimising the route take and time to change direction. Another consideration is that, because, under normal operation, automated storage and retrieval systems use robots for all tasks on the top of the grid, a challenge arises regarding how to perform maintenance tasks, such as fixing broken components on the grid elements, tightening grid connections, retrieving or fixing stalled robots, etc. If the task requires a human operator to access the top of the grid, the speed and efficiency of getting the operator to and from the location of the problem is particularly important to minimise system downtime.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a cross-sectional view of a rail;
Fig. 6 shows a cross-sectional view of a rail;
Fig. 7 shows a perspective view of a section of a rail system, showing an intersection;
Fig. 8 shows a perspective view of a vehicle for traversing a container storage and retrieval system;
Fig. 9 shows a cross-sectional view of a continuous track;
Fig. 10 shows a perspective close-up of a portion of a continuous track having a protrusion;
Fig. 11 shows a perspective close-up of a portion of a continuous track having a protrusion;
Fig. 12 shows a top view of a container storage and retrieval system with two vehicles;
Fig. 13 shows a top view of a container storage and retrieval system with two vehicles;
Fig. 14 shows a top view of a container storage and retrieval system with one vehicle;
Fig. 15 shows a top view of a container storage and retrieval system with one vehicle;
Fig. 16 shows a side view of a vehicle for traversing a container storage and retrieval system; and
Fig. 17 shows a method of controlling a vehicle on a container storage and retrieval system.

### DETAILED DESCRIPTION

In overview, the disclosure relates to a vehicle for a container storage and retrieval system that traverses a grid of rails using continuous tracks that propel the vehicle by pulling the vehicle across the rails rather than powering wheels that run along the rails. Protrusions on the tread of a continuous track engage rails lying perpendicular to the continuous track. As the continuous track is driven, the vehicle is pulled past a first rail (in a direction perpendicular to the first rail) via a first protrusion until the next protrusion on the tread engages the next rail in that direction. By having two sets of continuous tracks for different directions, the continuous tracks can be driven such that the resulting motion of the vehicle is not constrained to travelling strictly along rails (i.e., in the manner of typical wheeled robots in an automated storage and retrieval system). This means that the vehicle can travel in a more direct route across the grid, including diagonally across grid cells, and therefore uses a shorter travel distance to get between two points on the grid. This reduces vehicle journey time. This arrangement also means that the vehicle can turn during travel, or take curved routes, rather than needing to come to halt to perform a go-degree change of direction and a careful alignment with a different pair of rails to travel along before restarting. This increases the vehicle's average speed, i.e., reduces vehicle journey time, and provides greater flexibility of route choice. Avoiding stop-start turns also reduces power consumption and is more energy efficient. Removing the requirement for careful alignment with a different pair of rails before changing direction, and allowing movement across the rails in any direction, improves the usability for an operator controlling the vehicle.

### Automated storage and retrieval system overview

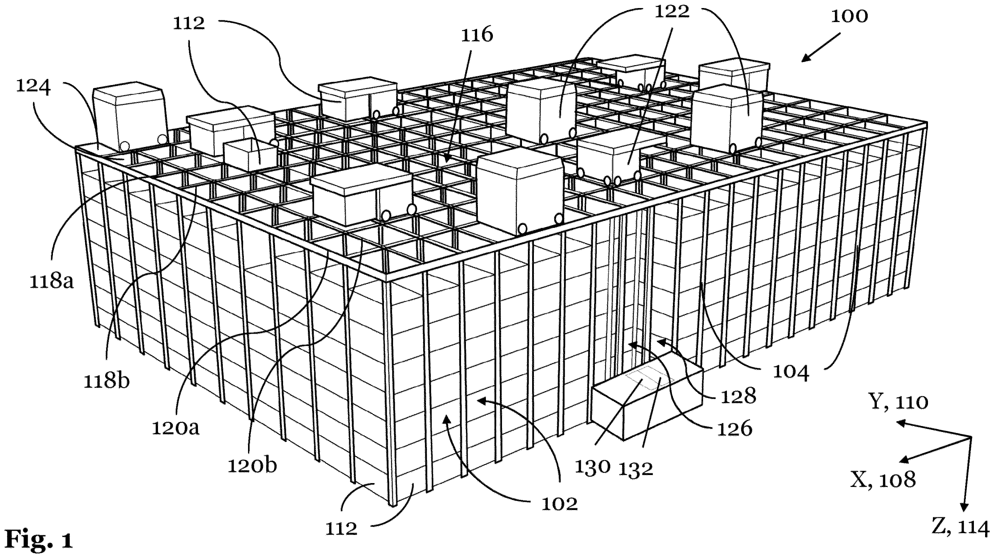

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

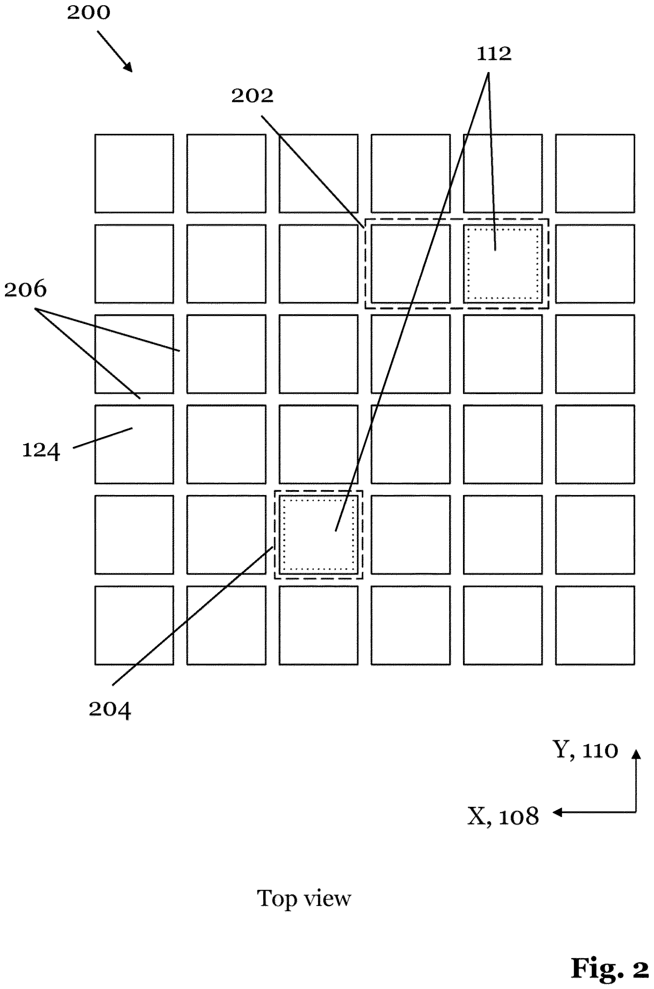

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

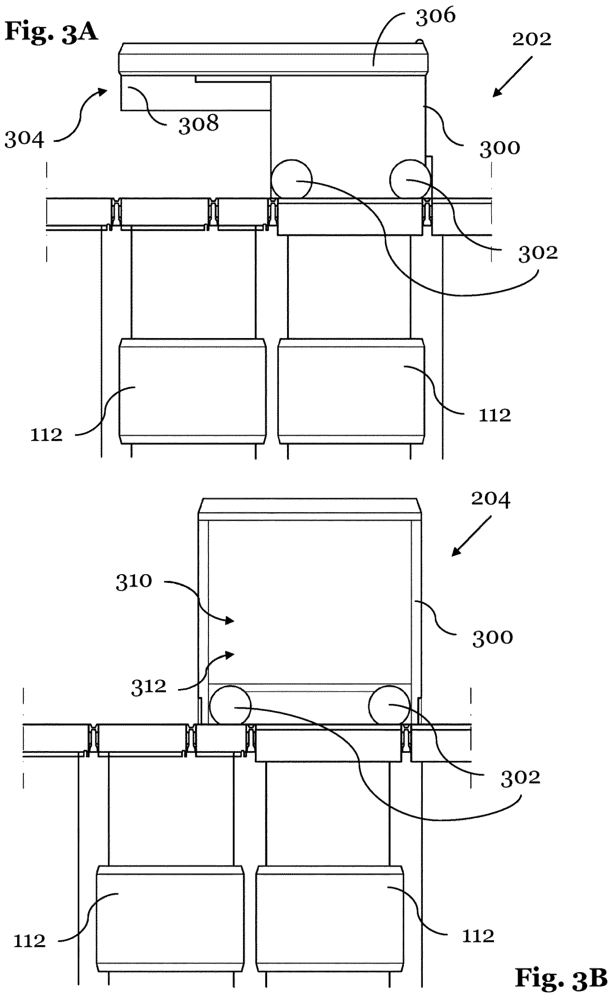

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

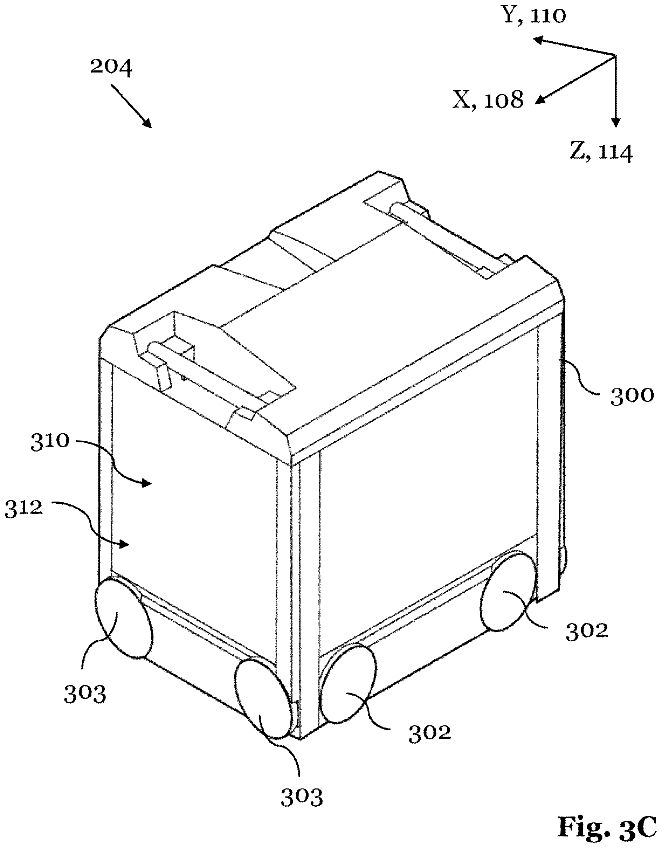

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

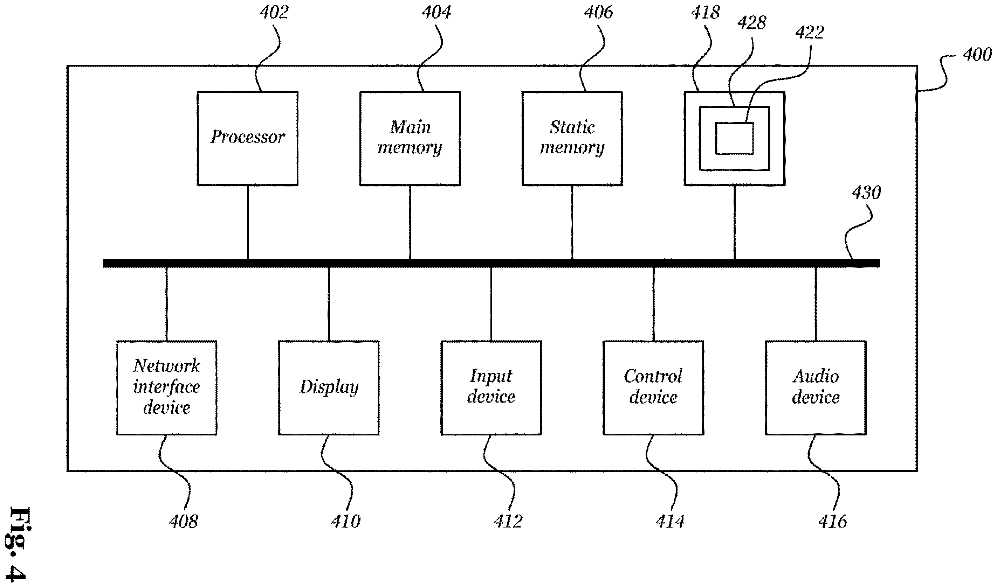

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Rail profiles

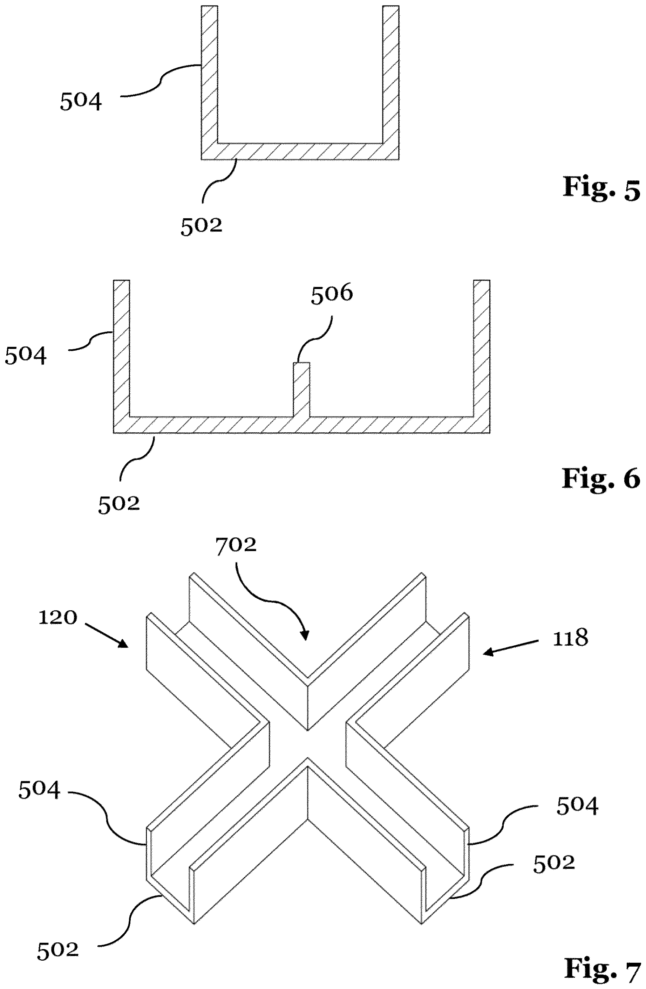

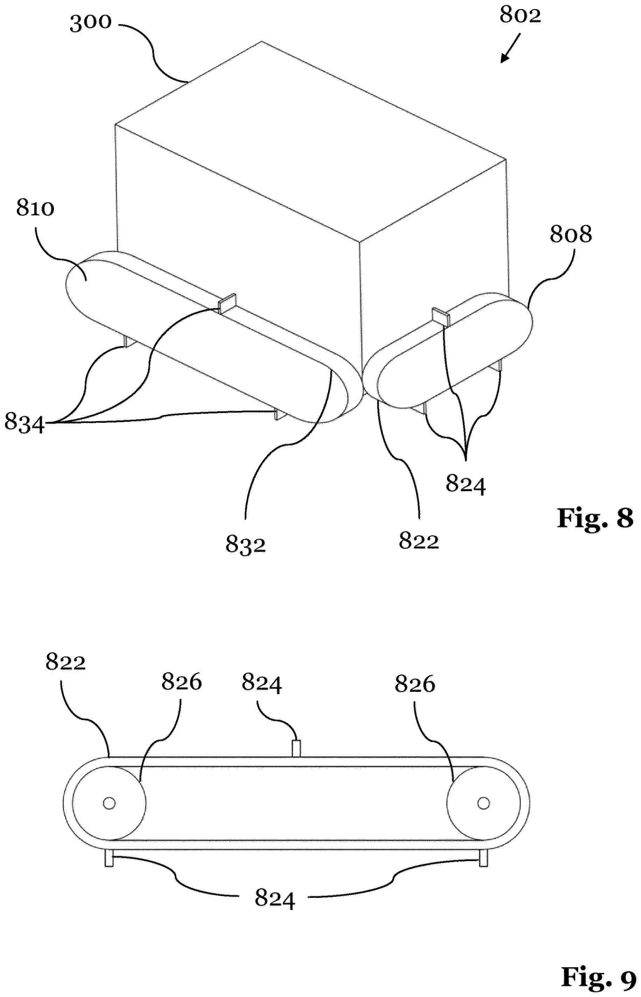

With reference to Fig. 5, an example rail profile, e.g. for any of rails 118, 120, 206 of the automated storage and retrieval system described above, has a base 502 and two side walls 504 extending perpendicularly from the base 502 on either side of the base. This arrangement may be called a square U-shape profile. An upper surface of the base 502 provides a pathway for wheels of a robot 202, 204 to move along the rail, guided by the side walls 504 on either side. An inner surface of each side wall 504 provides an engagement surface for a protrusion of a continuous track to bear against, e.g., as described below with reference to Fig. 8 to Fig. 16.

With reference to Fig. 6, an example rail profile, e.g. for any of rails 118, 120, 206 of the automated storage and retrieval system, has a base 502, two side walls 504 extending perpendicularly from the base 502 on either side of the base, and a central divider 506 extending perpendicularly from the base 502 at a midpoint between the two side walls 504. This arrangement may be called a square W-shape profile. This rail profile provides two pathways, one on either side of the central divider 506, for wheels of a robot 202, 204 to move along the rail. The engagement surface of the side walls 504 in this rail profile are the portion of the side walls 504 that is above the height of the central divider.

With reference to Fig. 7, an intersection 702 is formed between a rail 118 in the X direction rails and a rail 120 in the Y direction at each point where rails 118, 120, 206 of the automated storage and retrieval system cross. There is a gap in the side walls 504 of each rail 118, 120 at the intersection 702 to provide an uninterrupted passage for wheels of a robot 202, 204 to pass through the intersection 702. Fig. 7 shows an intersection of two rails each having a square U-shape profile but, in other arrangements, an intersection is formed between two rails each having a square W-shape profile, or between one rail having a square U-shape profile and another rail having a square W-shape profile.

### Vehicles with continuous tracks

With reference to Fig. 8, a vehicle 802 has a body 300 and two pairs of continuous tracks, including a first pair of continuous tracks 808 arranged in the X direction 108 and a second pair of continuous tracks 810 arranged in the Y direction 110. Only one continuous track of each pair is visible in Fig. 8. The first continuous tracks 808 each have a tread 822 (sometimes referred to as a 'first tread' to distinguish from treads of the second continuous tracks 810) and three protrusions 824 (sometimes referred to as 'first protrusions' to distinguish from protrusions of the second continuous tracks 810). Likewise, the second continuous tracks 810 each have a tread (or 'second tread') and three protrusions (or 'second protrusions'). The internal mechanism of the continuous tracks is not visible in Fig. 8 for simplicity, and may be covered by a respective end plate on the side of the continuous track opposite the body 300. The vehicle 802 is suitable to traverse a grid, the grid having a distance between neighbouring rails that are perpendicular to the first direction (e.g., the distance between rails 120 that are parallel to the Y direction) equal to the circumferential interval between first protrusions along the tread of the first continuous tracks 808, the grid having a distance between rails 118 that are perpendicular to the second direction (e.g., the distance between rails 118 that are parallel to the X direction) equal to the circumferential interval between second protrusions along the tread of the second continuous tracks 810.

The protrusions 824, 834 have an oblong shape and are arranged perpendicular across the direction of movement of the tread 822, 832. The width of the protrusions (in the direction perpendicular to the direction of movement of the tread 822, 832) is greater than the width of the gap between side walls 504 of rails of the grid arranged parallel to the continuous track 808, 810. This means that, even when the protrusion engages a rail 120 perpendicular to the continuous track 808, 810 at an intersection 702, the protrusion engages the rail either side of the gap.

The protrusions 824, 834 are spaced apart with a distance along the respective tread 822, 832 between protrusions (also referred to as a 'circumferential interval') that is approximately equal to the perpendicular distance between rails. In particular, the first continuous track 808 is arranged to propel the vehicle 802 in the X direction 108 by pulling on rails 120 arranged in the Y direction 110 and the protrusions are spaced apart by the distance between corresponding neighbouring rails 120. The second continuous track 810 is arranged to propel the vehicle 802 in the Y direction 110 by pulling on rails 118 arranged in the X direction 108 and the protrusions are spaced apart by the distance between corresponding neighbouring rails 118. This means that the circumferential length of the first tread 822 (also referred to herein as 'tread circumference') is a multiple integer of the distance between neighbouring rails 120 in the Y direction 110 and the circumferential length of the second tread 832 is a multiple integer of the distance between neighbouring rails 118 in the X direction 108. In particular, the vehicle 802 described with reference to Fig. 8 has continuous tracks with respective circumferential lengths three times the corresponding rail spacing. This means that, when traversing the grid, there is always at least one protrusion of each continuous track engaging a respective rail to provide locomotion by pulling the vehicle 802 across the rails. In other words, a particular protrusion does not disengage its corresponding rail until the next protrusion on the tread has engaged the next rail in the direction of travel.

The height of the protrusions 824, 834 (extending away from the tread 822, 832) is less than the height of the side walls 504 of the rails, so that the tread 822, 832 can rest on top of the rails while the protrusions engage the engaging surface of the side wall 504 to pull the vehicle 802 onwards. In arrangements for traversing a grid with at least some square W-shape rail profiles, the heigh of the protrusions 824, 834 is less than the different between the height of the side wall 504 and the height of the central divider 506.

With reference to Fig. 9, the continuous track 808 is driven by two drive wheels 826, one arranged at either end of the continuous track 808 with a belt looped around the drive wheels 826. The tread 822, 832 is the outer surface of the belt. The drive wheels 826 rotate powered by one or more motors and drive the tread 822 so that the protrusions progress around the loop. The length of the continuous track is approximately equal to the distance between the axes of rotation of the two wheel drives 826. This corresponds to the length of the portion of the tread 822 that can engage rails under the continuous track 808. The length of the continuous track as shown in Fig. 9 is slightly greater than the distance between neighbouring rails 120 of the grid that are parallel to the Y direction 110 (i.e. the distance being measured in the X direction 108). The tread circumference of the tread 822 is equal to approximately three times the distance between neighbouring rails 120 of the grid that are parallel to the Y direction 120. The protrusions are spaced evenly along the tread circumference of the tread and therefore have a circumferential interval approximately equal to the distance between neighbouring rails 120 of the grid that are parallel to the Y direction 110. Accordingly, when the tread 822 is driven by the drive wheels 826, the next protrusion arrives at a position underneath the front of the continuous track (in the direction of travel) at the same time as the vehicle 802 reaches the next rail 120 that is perpendicular to the X direction 108 to engage that rail and continue to pull the vehicle across the rails 120 producing locomotion in the X direction 108. The above description with reference to Fig. 9 also applies to the corresponding features of a continuous track 810 in the second set of continuous tracks, producing locomotion in the Y direction 110 by pulling on the rails 118 that are parallel to the X direction 108. The same relationships apply regarding the length of the second set of continuous tracks, the circumferential interval of second protrusions 834, the circumferential length of the second tread 832, etc., with respect to the distance between rails 118 that are parallel to the X direction 108.

The features of the vehicle 802 may have any of the features described above with reference to Fig. 1, Fig, 2, Fig, 3, and Fig. 4, except to note the presence of continuous tracks 808, 810 instead of locomotive wheels 302, 303.

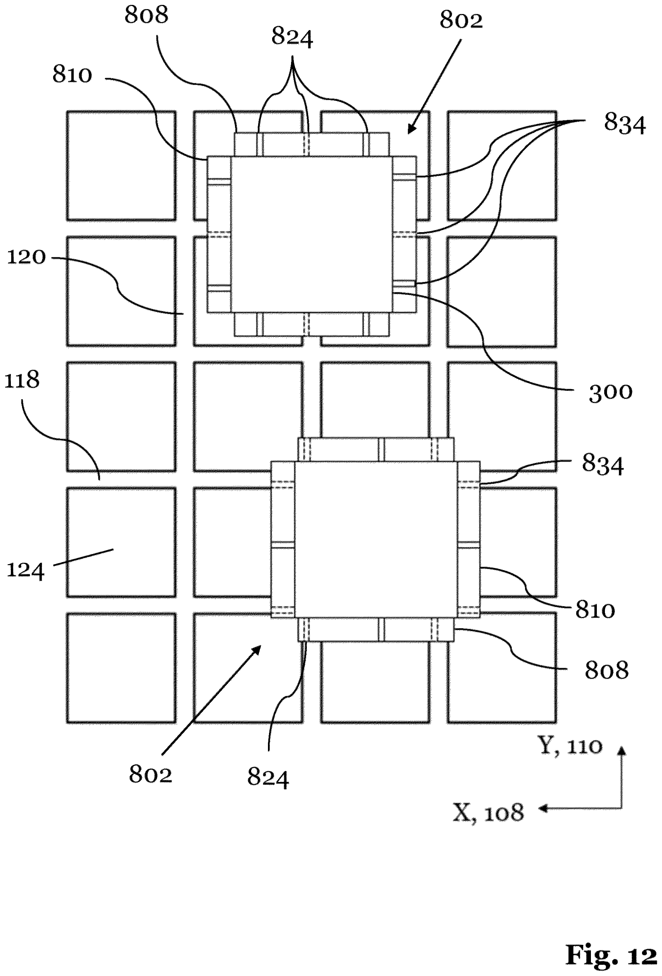

Although a particular vehicle 802 is described above with reference to Fig. 8 and Fig. 9, in other arrangements a vehicle with first and second sets of the continuous tracks has (in any combination): a different number, size or arrangement of continuous tracks (e.g., as described below with reference to Fig. 12, Fig. 13, Fig. 14, and Fig. 15); a different tread loop pathway (e.g., incorporating any combination of pulleys, rollers, gears, etc.); more or fewer drive wheels; more than 3 protrusions on each continuous track; a different size or shape of protrusions; and/or a different size or form of vehicle body 300 and/or additional equipment mounted to the vehicle body 300. The belt may be made from rubber, or a metal strip coated in rubber, or any other material suitable for the specific application. Instead of a flexible belt as shown in Fig. 9, a tread of a continuous track may comprise a chain of plates or links forming a loop around one or more drive wheels, optionally with a coating of a different material.

### Protrusions

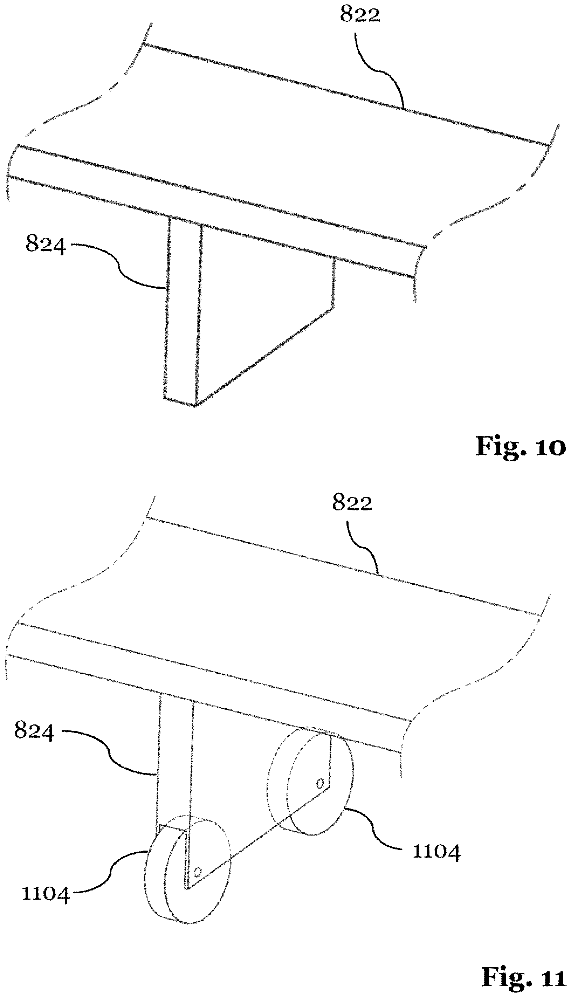

With reference to Fig. 10, a first protrusion 824 extends from the tread 822 perpendicularly and has an oblong shape with a width equal to the width of tread 822. In other arrangements, the first protrusion is disposed at an acute angle with respect to the tread. Alternatively or additionally, in some arrangements the first protrusion 824 is wider than the tread 822. Alternatively or additionally, in some arrangements the first protrusion has a rounded, curved, or bent shape.

With reference to Fig. 11, in another example of a first protrusion 824, the first protrusion 824 has two wheels mounted on axes. The axes of rotation are in the first direction, so that the wheels can roll in direction perpendicular to the first direction. The wheels are free-rolling and unpowered, but allow for smooth travel along a rail perpendicular to the first direction (the first direction being that in which the first protrusion pulls). This reduces the drag on the vehicle 802 when both the first and second continuous tracks are driven, wherein the first protrusion slides along in the Y direction 110 while pulling the vehicle 802 along in the X direction 108 and vice versa for the second protrusion(s). In other arrangements, the protrusions may comprise a single wheel 1104 rather than two. A distal portion of the first protrusion (i.e., the portion away from the wheels 1104 and towards the tread 822) can function as a pulling flange.

In some arrangements, the first/second protrusions are made of metal or metal coated in rubber. In some arrangements, the first/second protrusions are made of or coated in a low friction material, such as PTFE, Nylon, Acetal, etc., as and when required according to the specific implementation.

The above description with reference to Fig. 10 and Fig. 11 also applies to the corresponding features of second protrusions 834 and treads 832 of continuous tracks 810 in the second set of continuous tracks.

In arrangements wherein the circumferential interval between first protrusions is less than the distance between rails that are arranged perpendicular to the first direction, the first protrusions do not always align with intersections (where there is a gap in the rails that are arranged parallel to the first direction for the first protrusions to pass through) when moving in the second direction. To avoid snagging on rails at an intermediate position between intersections, the protrusions may be hinged to rotate in a plane perpendicular to the first direction. The same features and principles can be applied to second protrusions.

### Continuous track arrangements

With reference to Fig. 12, an overhead view of a vehicle 802 as described above with reference to Fig. 8 and Fig. 9, is shown in two different positions on the grid. The grid has first rails 118 parallel to the first direction, i.e., X direction 108, and second rails 120 parallel to the second direction, i.e., Y direction 110. The grid defines access openings 124 between neighbouring pairs of first rails 118 and second rails 120. The overhead view of the vehicle 802 shows both first continuous tracks 808 of the first pair of continuous tracks and both second continuous tracks 810 of the second pair of continuous tracks, with respective first protrusions 824 and second protrusions 834. Each continuous track is mounted to a side of the body 300 and has a length approximately equal to the length of the corresponding side of the body 300. This means that the drive wheels can be mounted directly to the body 300.

In a first arrangement, above an intersection of the grid, as shown in the position at the top of Fig. 12, the vehicle 802 is traversing the grid in a third direction that is a combination of the negative X direction and positive Y direction. Accordingly, first protrusions 824 engage a side wall of the second rails 120 as the first continuous tracks drive the vehicle 802 in the negative X direction. Correspondingly, the second protrusions 834 engage a side wall of the first rails 118 as the second continuous tracks drive the vehicle 802 in the positive Y direction. In the first arrangement, there is one protrusion of each continuous track engaging the corresponding rail. The protrusion of each continuous track is underneath the robot and shown in dashed lines in Fig. 12. Accordingly, the other two protrusions are on the top side of the respective continuous track as they move along with the tread around the continuous track until engaging the next rail in the direction of travel. In a second arrangement, above an access opening 124, as shown in the position at the bottom of Fig. 12, the vehicle 802 is also travelling in a negative X direction and positive Y direction. For each implementation, the particular resulting direction of travel will also depend on the relative rates of rotation of the first and second tracks, but it will be in a direction generally upwards and to the right of Fig. 12.

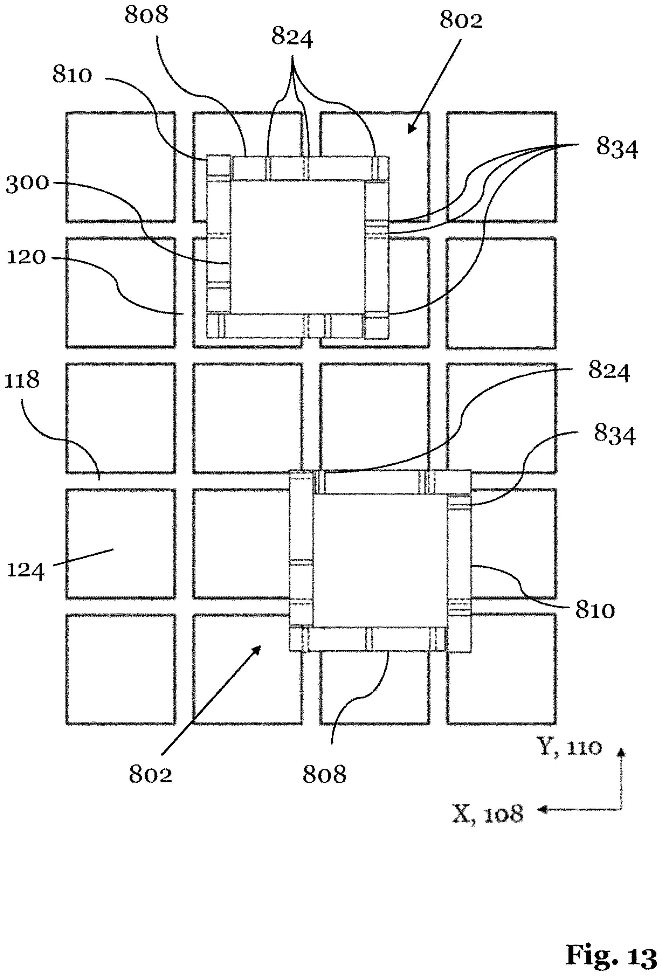

With reference to Fig. 13, Fig. 14, and Fig. 15, three alternatives to the continuous track layout of Fig. 12 are described below.

With reference to Fig. 13, the vehicle 802 comprises a first and second pair of continuous tracks, as in Fig. 12, but the continuous tracks are longer than the corresponding side of the body 300. This means that there is an additional torque transfer mechanism to provide a torque to the drive wheel located away from the side of the body 300. For example, the continuous track may comprise a inner plate between the continuous track and the body 300 on which a torque transfer gear is mounted and connected via a pulley to a shaft extending out of the body 300. This arrangement confines the footprint of the vehicle 802 to a smaller area compared to the arrangements described above with reference to Fig. 12. The vehicle 802 shown at the top of Fig. 13 is depicted being driven in a direction between the negative X direction and the positive Y direction. The vehicle 802 shown at the bottom of Fig. 13 is depicted being driven in a direction between negative X direction and negative Y direction, i.e. downwards and to the right of Fig. 13. The other features of the continuous tracks, including protrusions, etc. can be according to any of the details described above.

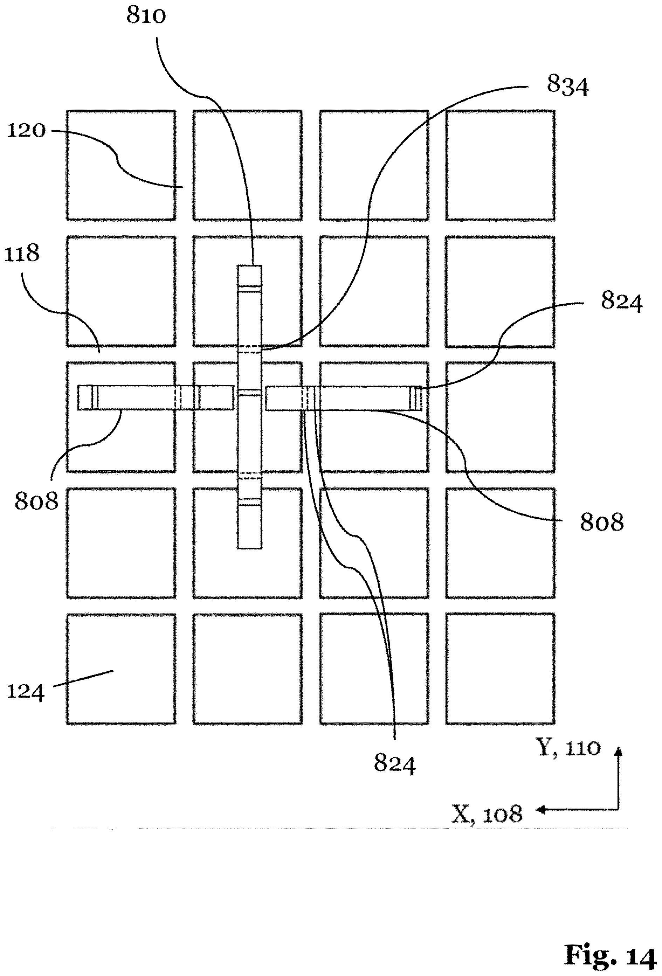

With reference to Fig. 14, a single second continuous track 810 is used instead of a pair of second continuous tracks. In other words, the second set of continuous tracks is set comprising only one continuous track. The first set of continuous tracks 808 is a pair of continuous tracks arranged substantially colinearly. Because there is only a single continuous track in the second direction (Y direction 110), the length of the second continuous track 810 is greater than twice the distance between neighbouring first rails 118, so that the second set still has at least two points of contact with the grid as the vehicle 802 traverses the grid. Accordingly, the continuous track has five second protrusions 834 and a tread circumference of five times the distance between neighbouring first rails 118. The vehicle 802 shown in Fig. 14 is depicted being driven in a direction between negative X direction and negative Y direction, i.e. downwards and to the right of Fig. 14. The body 300 is not shown in Fig. 14 for simplicity, but is mounted above a middle portion where the continuous tracks meet and can have suitable shape or size to provide a stable structure. The body is connected to the continuous tracks via the drive wheels, e.g. on brackets extending below the body 300 onto which the drive wheels are mounted and drive by one or more torque transfer gear, pulleys, etc. or any suitable torque transmission mechanism. The other features of the continuous tracks, including protrusions, etc. can be according to any of the details described above.

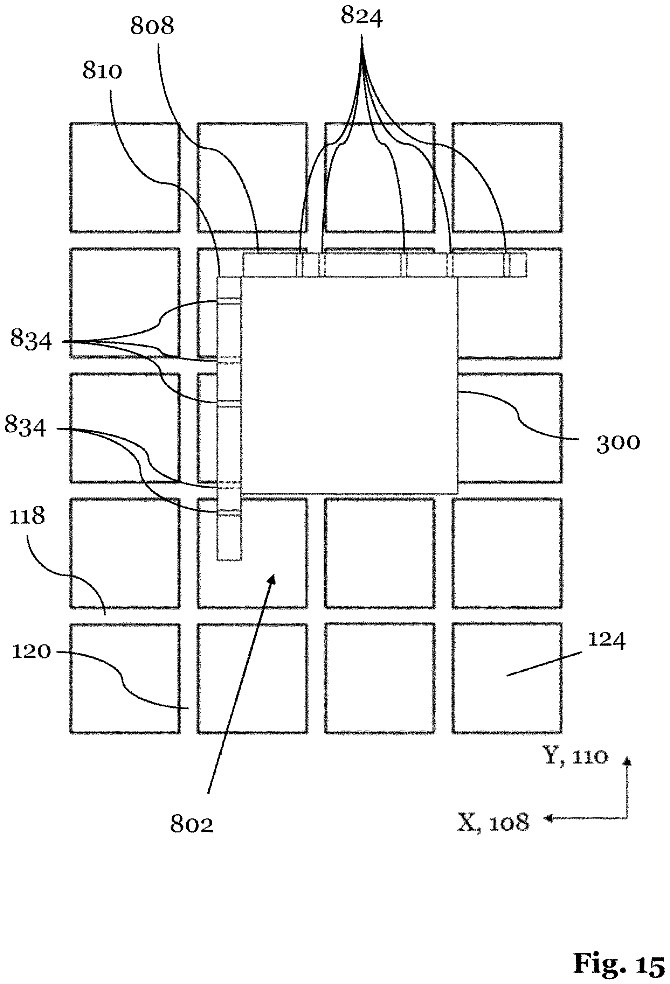

With reference to Fig. 15, the first set of continuous tracks comprises a single continuous track 808 and the second set of continuous tracks comprises a single continuous track 810, having the properties of a single continuous track described above with reference to Fig. 14. The vehicle 802 shown in Fig. 15 is depicted being driven in a direction between positive X direction and negative Y direction, i.e. downwards and to the left of Fig. 15. As there are only two continuous tracks, they are mounted on adjacent sides of the body 300. The sides of the body 300 are less than the length of the continuous tracks so that, wherever along the continuous tracks the rails are, the centre of gravity of the vehicle 802 is within the supported area of the vehicle 802 and the robot does not tip over. The other features of the continuous tracks, including protrusions, torque transfer mechanisms, etc. can be according to any of the details described above.

Fig. 12, Fig. 13, Fig. 14, and Fig. 15 show some example arrangements of the continuous tracks. However, in other arrangements, there is any suitable combination one or more of the following: more than two continuous tracks in each set; different positions of the continuous tracks in the X and Y directions (although the orientations remain the same, i.e. the first set propel the robot in the first direction and the second set propel the robot in the second direction); and different lengths of continuous tracks. In some arrangements, the properties of the continuous tracks in the first set may be different from the second set, e.g.: length of continuous track, circumferential interval of protrusions; number, type, shape and size of protrusions; number, shape and size of continuous tracks; layout of continuous tracks; etc. In some arrangements, some properties of the continuous tracks are different for different continuous tracks within the first or second set, e.g.: length of continuous track; number, type, shape and size of protrusions; shape and size of continuous tracks; etc. (noting that generally the circumferential interval of protrusions is the same for all continuous tracks of a given set, since this is usually determined by grid with uniform spacing). While Fig. 12, Fig. 13, Fig. 14, and Fig. 15 show a grid having square access openings 124, i.e., having equal distances between rails 118 in the X direction and rails 120 in the Y direction, this is for simplicity and other grids have a different aspect ratio of access opening, with the corresponding implications on the continuous tracks of the vehicle 802 configured to traverse the grid.

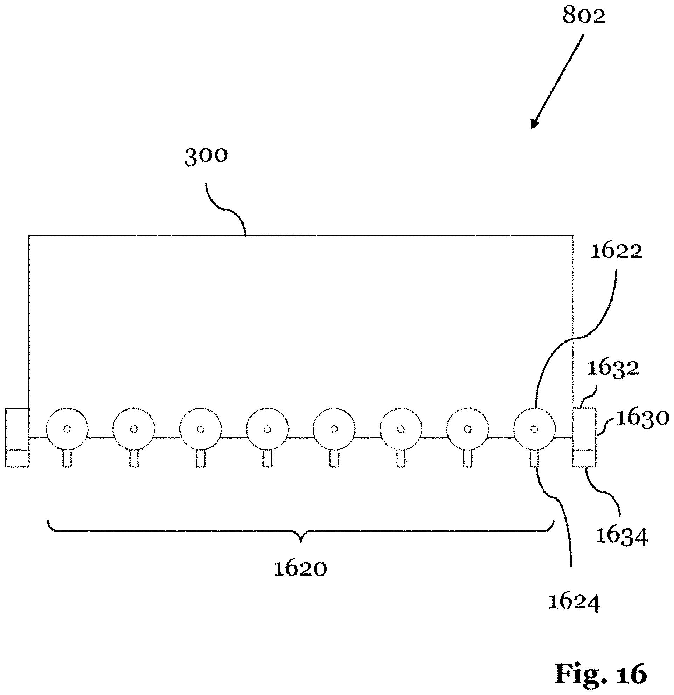

With reference to Fig. 16, an alternative form of continuous tracks comprises a plurality of rollers 1622 arranged in a row 1620 of rollers along a side of the body 300. The principles of locomotion of continuous tracks as described above with reference to Fig. 8 to Fig. 15 also apply to continuous tracks in comprising rollers 1622. For example, the circumferential surface of the roller is the tread and each roller of first continuous track has a first protrusion 1624 extending from the tread for engaging rails that are arranged perpendicular to the direction of travel provided by the first continuous track. The length of a continuous track comprising rollers can be defined as length of the portion of the tread under the rollers, i.e., approximately the diameter of the roller, or the combined length of these portions for a row of rollers. This is the length of the region below the continuous track that can engage and pull on rails to move the vehicle 802 forward.

In an example vehicle, with reference to Fig. 16, continuous tracks comprising the row 1620 of roller comprises eight rollers 1622. In other examples, more or fewer rollers are used. Neighbouring rollers 1622 may be driven with a quarter-turn phase shift between them (i.e., 90 degrees difference in the position of the protrusion between each neighbouring pair of rollers). For example, the first roller in the roll may start with the protrusion arranged vertically upwards, the next roller with its protrusion arranged horizontally right (as viewed from the side of the body 300), the next vertically downwards, the next horizontally left, and then the pattern repeated. For sets of continuous tracks having a different number of rollers, the phase-shift may be 360 divided by twice the number of rollers, so that, at any one time, two protrusions are engaging a rail below the continuous track.

The vehicle 802 comprises a second set of continuous tracks 1630 comprising second rollers 1632 and second protrusions 1634, which can have any of the features as described above regarding the first continuous tracks.

Aside from the use of one or more continuous tracks comprising rollers rather than belts and wheels, the vehicle 802 may have any of the features described above with reference to Fig. 8 to Fig. 15.

### Systems using vehicles with continuous tracks

An automated storage and retrieval system having vehicles 802 with continuous tracks has any of the features described above with reference to Fig. 1, Fig. 2, Fig. 3A, Fig. 3B, and Fig. 4. The rail system or network 116 can be assembled and used in the same way as described above with reference to Fig. 1. As described above with reference to Fig. 5, Fig. 6, and Fig. 7, the rails may each comprise an area of a side wall of the rail adapted to be engaged by corresponding first or second protrusions of a vehicle 802 as described above with reference to Fig. 8 to Fig. 16.

### Methods of using vehicles with continuous tracks

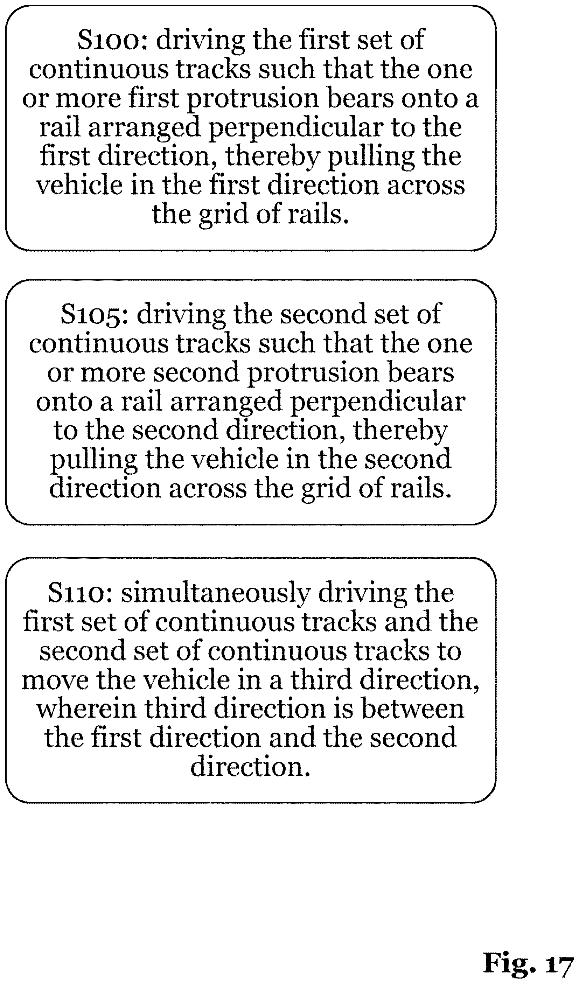

With reference to Fig. 17, a method of controlling a vehicle 802 as described above with reference to Fig. 8 to Fig. 16 comprises driving S100 the first set of continuous tracks such that the one or more first protrusion bears onto a rail arranged perpendicular to the first direction, thereby pulling the vehicle in the first direction across the grid of rails. Additionally or alternatively, the method comprises driving S105 the second set of continuous tracks such that the one or more second protrusion bears onto a rail arranged perpendicular to the second direction, thereby pulling the vehicle in the second direction across the grid of rails. Accordingly, the vehicle 802 can traverse the grid of rails. By simultaneously driving S110 the first and second set of continuous tracks, i.e., controlling the vehicle to perform the driving S100, S105 at the same time, the vehicle 802 will travel in a third direction which results from a combination of the motion caused by the two sets of continuous tracks. By way of an example, as described above with reference to Fig. 12 to Fig. 15, the first set of continuous tracks 808 propels the vehicle 802 in the X direction 108 and the second set of continuous tracks 810 propels the vehicle 802 in the Y direction 110. Accordingly, simultaneously driving S110, S105, S100 the first set of continuous tracks in a positive X direction and the second set of continuous tracks in a positive Y direction at equal speeds (i.e., the distance of tread progression per unit time) will provide resultant motion in the third direction being at 45 degrees from the X direction towards the Y direction. In general, the speed of a continuous track can be defined as the distance of tread progression per unit time. This can be related to the rate of rotation (the number of completed circuits of the tread per unit time) by the equation: the speed equals the rate of rotation times the circumferential length of the tread.

In some examples, methods of controlling the vehicle comprises only one of the actions described above with reference to Fig. 17, or any combination thereof, repeated actions, additional actions, or any different order of actions. The control of the vehicle 802 can be performed in any way as described above relating to the operation of the automated storage and retrieval system as described with reference to Fig. 1 and Fig. 2, and/or using a computing device as described above with reference to Fig. 4. In some examples, the control of the vehicle 802 is coordinated by a control centre of the automated storage and retrieval system, e.g. a server, via any suitable communication channel with the vehicle 802. The control signals sent to the vehicle 802 can include any combination of: a route instruction, a speed instruction, a timing instruction, a destination instruction, a destination task instruction, etc. In some examples, the method may be performed by a human operator on the vehicle 802.

### General disclosures

In an aspect of the present disclosure, there is provided a vehicle for a container storage and retrieval system. The vehicle configured to traverse a grid of rails that has rails arranged perpendicular to a first direction and rails arranged perpendicular to a second direction. The vehicle comprises a vehicle body; a first set of continuous tracks for propelling the vehicle in the first direction; and a second set of continuous tracks for propelling the vehicle in the second direction. Each continuous track of the first set comprises a tread and one or more first protrusion for engaging rails arranged perpendicular to the first direction, such that the first set of continuous tracks is configured to have least two points of contact with the rails arranged perpendicular to the first direction when traversing the grid of rails. Each continuous track of the second set comprises a tread and one or more second protrusion for engaging rails arranged perpendicular to the second direction, such that the second set of continuous tracks is configured to have least two points of contact with the rails arranged perpendicular to the second direction when traversing the grid of rails. The continuous tracks provide locomotion across rails rather than along rails and therefore are not constrained to rectilinear motion following the rails. Accordingly, the vehicle can travel in a direct path between any two points on the grid and does not need to come to a halt before changing direction of travel. This increases the speed and efficiency of traversing the grid.

The one or more first protrusion may be located on the tread with a circumferential interval between first protrusions equal to a distance between the rails arranged perpendicular to the first direction; and/or the one or more second protrusion may be located on the tread with a circumferential interval between second protrusions equal to a distance between the rails arranged perpendicular to the second direction. This means that every rail that the vehicle traverses in the grid is engaged, in turn, by a respective protrusion, and no protrusions are positioned in the gaps between neighbouring rails. Accordingly, the continuous tracks provide a consistent locomotive force and the protrusions for engaging rails arranged in one direction do not impede motion by encountering rails arranged in another direction. A circumferential interval can be defined as the distance that separates sequential protrusions along the tread. In other words, the circumferential interval represents how far the tread advances until the starting position of one protrusion has been reached by the next protrusion.

Each continuous track of the first set may have a length greater than the distance between the rails arranged perpendicular to the first direction; and/or each continuous track of the second set may have a length greater than the distance between the rails arranged perpendicular to the second direction. The length of a continuous track can be defined as the length of the portion of the tread at any one point in time that is directly under the continuous track when traversing the grid. Accordingly, the length of the continuous track being greater than the distance between rails means that each protrusion does not disengage its respective rail until the next protrusion on the tread has engaged the next rail. In other words, each continuous track has at least one point of contact with the rails during traversal of the grid.

The first set of continuous tracks may comprise a pair of first continuous tracks, wherein each continuous track of the pair is configured to have least one point of contact with the rails arranged perpendicular to the first direction when traversing the grid of rails; and/or the second set of continuous tracks may comprise a pair of second continuous tracks, wherein each continuous track of the pair is configured to have least one point of contact with the rails arranged perpendicular to the second direction when traversing the grid of rails. This arrangement of two pairs of continuous tracks provides a compact arrangement providing an area for the body of the vehicle to be stably supported, e.g., with the continuous tracks arranged around the perimeter of the area, with each continuous track of the first pair on either side in one direction and each continuous track of the second pair on either side in another direction.

The first set of continuous tracks may comprise a single first continuous track having a length greater than twice the distance between the rails arranged perpendicular to the first direction; and/or the second set of continuous tracks may comprise a single second continuous track having a length greater than twice the distance between the rails arranged perpendicular to the second direction. Accordingly, the length of the continuous track being greater than twice the distance between rails means that each protrusion does not disengage its respective rail until the next two protrusions on the tread have engaged the next two rails. In other words, each continuous track has at least two points of contact with the rails during traversal of the grid. Using a single continuous track in one (or both) direction(s) means that fewer continuous tracks are needed overall.

The first direction may be perpendicular to the second direction.

The width of each first protrusion (i.e., width perpendicular to the first direction) may be greater than the width of rails of the grid parallel to the first direction and/or the width of each second protrusion (i.e., width perpendicular to the second direction) may be greater than the width of rails of the grid parallel to the second direction.

Some or each of the continuous tracks may comprise 3 protrusions, 4 protrusions, 5 protrusions, 6 protrusions, or 7 protrusions; equally separated along the respective tread.

The one or more first protrusion may comprise a wheel arranged to roll along the rails arranged perpendicular to the first direction; and/or the one or more second protrusion may comprise a wheel arranged to roll along the rails arranged perpendicular to the second direction. In other words, the wheel rolls along the rails perpendicular to the first direction while protrusion pulls perpendicularly on the rail to move the vehicle in the first direction (and correspondingly for the wheel on the second protrusion). The first/second protrusions may comprise a pulling flange for engaging an upper portion of a side wall of the respective rail, while the wheel rolls along the base of the respective rail. The one or more first protrusion may be configured to slide along the rails arranged perpendicular to the first direction; and/or the one or more second protrusion may be configured to slide along the rails arranged perpendicular to the second direction. In each of the above examples, by facilitating the movement of the protrusions along the rails, i.e., in a direction perpendicular to the pulling direction of the protrusions, there is less drag when moving both the first and second sets of continuous tracks. The first and/or second protrusion and/or the pulling flange thereof may comprise a low-friction material or a low-friction coating, e.g. Nylon, Acetal, PTFE, etc.

The protrusions may comprise a metal. The protrusions may be integral to the tread or attached to the tread by screws, nuts and bolts, clasps, locks, etc. The protrusions may be coated in rubber, e.g., fully or partially.

The vehicle may comprise a platform rotatably mounted on the vehicle body. The platform may comprise equipment for inspecting and/or maintaining the grid. The platform may comprise a seat for a human operator. This provides a versatile vehicle for working on the grid, or in automated storage and retrieval systems more generally, allowing direct and fast movement across the grid.

The vehicle may be a robotic vehicle for storing or retrieving a storage container is an automated storage and retrieval system, the robotic vehicle comprising: a cantilever element extending from the vehicle body substantially parallel to the grid of rails and a gripping device for gripping a storage container, wherein the gripping device is configured to be raised or lowered from the cantilever element. Alternatively or additionally, the vehicle may comprise an internal cavity within the vehicle body and a gripping device for gripping a storage container, wherein the gripping device is configured to be raised or lowered from the internal cavity.

Each continuous track of the first set of continuous tracks and/or the second set of continuous tracks may comprise a plurality of wheels and a belt forming a loop around the plurality of wheels, wherein the tread is an outer surface of the belt. The wheels drive the belt around the loop. The wheels may be any of toothed or smooth wheels, gears, cogs, etc., the an inner surface of the belt having corresponding recesses for receiving teeth of a toothed wheel or gear, etc. One or more motors of the vehicle configured to drive the plurality of wheels can therefore drive the continuous tracks to move the vehicle across the grid. Alternatively or additionally, the vehicle may comprise one or more operator-powered drive mechanism to transfer torque provided by a human operator to the continuous tracks, e.g., by a set of pedals or wheels and a torque transmission.

The first set of continuous tracks may be configured to be controlled independently of the second set of continuous tracks and/or the second set of continuous tracks may be configured to be controlled independently of the first set of continuous tracks. The vehicle may be configured to receive a control signal comprising instructions how to control the first/second continuous tracks or a route to take.

The tread of some or each of the continuous tracks may comprise a chain of plates or chain links, or may comprise a belt, e.g. a metal belt or a rubber belt.

Each continuous track of the first set of continuous tracks and/or the second set of continuous tracks may comprise a roller, wherein the tread is a circumferential roller surface of the roller. Some or each of the first/second continuous tracks may comprise a row of rollers with parallel axes of rotation, wherein the protrusions on the treads of the rollers are arranged such that at least one protrusion of the row of rollers is in contact with a rail when the vehicle is traversing the grid. The circumferential interval for a roller may be the circumference of the roller, or a multiple of the circumference of the roller (in which case the roller makes multiple revolutions between engaging one rail and engaging the next rail). The length of the roller continuous track can be defined as the length of a row of rollers for which protrusions can engage a rail under the row. As such, a row of rollers may also be referred to as a continuous track, despite rollers not being directly attached together, because the row of rollers provides a continuous area under the row of rollers in which rails are engaged to propel the vehicle.

In an aspect of the present disclosure, there is provided an automated storage and retrieval system comprising: a plurality of vertical frame members; a grid of rails arranged across the vertical frame members, wherein the grid of rails defines access openings for lifting and lowering a storage container through the grid of rails; and a vehicle, according to the aspect described above, arranged to traverse the grid of rails. The grid of rails may comprise a first set of rails parallel to the first direction (perpendicular to second direction) and a second set of rails parallel to the second direction (perpendicular to the first direction).

In an aspect of the present disclosure, there is provided a method of controlling a vehicle according to the aspect described above. The method may comprise driving the first set of continuous tracks such that the one or more first protrusion bears onto a rail arranged perpendicular to the first direction, thereby pulling the vehicle in the first direction across the grid of rails. The method may comprise driving the second set of continuous tracks such that the one or more second protrusion bears onto a rail arranged perpendicular to the second direction, thereby pulling the vehicle in the second direction across the grid of rails. The method may comprise simultaneously driving the first set of continuous tracks and the second set of continuous tracks to move the vehicle in a third direction, wherein third direction is between the first direction and the second direction.

The method may comprise controlling the rate(s) of rotation of the first continuous track and/or the second continuous track to change the third direction. Alternatively or additionally, the method may comprise reversing the direction of rotation of the first continuous track and/or the second continuous track to change the third direction. The method may comprise controlling the rate(s) of rotation of the first continuous track and/or the second continuous track to take a diagonal path across the grid, and/or a curved path across the grid.

In an aspect of the present disclosure, there is provided a computer-readable medium comprising instructions which, when executed by a processor of a device, cause a vehicle according to the aspect described above to perform a method according to the aspect described above.

It is to be understood that the above detailed description and general disclosures are intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A vehicle for a container storage and retrieval system, the vehicle configured to traverse a grid of rails having rails arranged perpendicular to a first direction and rails arranged perpendicular to a second direction, the vehicle comprising:
a vehicle body;
a first set of continuous tracks for propelling the vehicle in the first direction, wherein each continuous track of the first set comprises a tread and one or more first protrusion for engaging rails arranged perpendicular to the first direction, such that the first set of continuous tracks is configured to have least two points of contact with the rails arranged perpendicular to the first direction when traversing the grid of rails; and
a second set of continuous tracks for propelling the vehicle in the second direction, wherein each continuous track of the second set comprises a tread and one or more second protrusion for engaging rails arranged perpendicular to the second direction, such that the second set of continuous tracks is configured to have least two points of contact with the rails arranged perpendicular to the second direction when traversing the grid of rails.

2. A vehicle according to claim 1, wherein:
the one or more first protrusion is located on the tread with a circumferential interval between first protrusions equal to a distance between the rails arranged perpendicular to the first direction; and/or
the one or more second protrusion is located on the tread with a circumferential interval between second protrusions equal to a distance between the rails arranged perpendicular to the second direction.

3. A vehicle according to claim 1 or 2, wherein:
each continuous track of the first set has a length greater than the distance between the rails arranged perpendicular to the first direction; and/or
each continuous track of the second set has a length greater than the distance between the rails arranged perpendicular to the second direction.

4. A vehicle according to any of claims 1 to 3, wherein:
the first set of continuous tracks comprises a pair of first continuous tracks, wherein each continuous track of the pair is configured to have least one point of contact with the rails arranged perpendicular to the first direction when traversing the grid of rails; and/or
the second set of continuous tracks comprises a pair of second continuous tracks, wherein each continuous track of the pair is configured to have least one point of contact with the rails arranged perpendicular to the second direction when traversing the grid of rails.

5. A vehicle according to any of claims 1 to 3, wherein:
the first set of continuous tracks comprises a single first continuous track having a length greater than twice the distance between the rails arranged perpendicular to the first direction; and/or
the second set of continuous tracks comprises a single second continuous track having a length greater than twice the distance between the rails arranged perpendicular to the second direction.

6. A vehicle according to any preceding claim, wherein:
the one or more first protrusion comprises a wheel arranged to roll along the rails arranged perpendicular to the first direction; and/or
the one or more second protrusion comprises a wheel arranged to roll along the rails arranged perpendicular to the second direction.

7. A vehicle according to any preceding claim, wherein:
the one or more first protrusion is configured to slide along the rails arranged perpendicular to the first direction; and/or
the one or more second protrusion is configured to slide along the rails arranged perpendicular to the second direction.

8. A vehicle according to any preceding claim, comprising:
a platform rotatably mounted on the vehicle body.

9. A vehicle according to claim 8, wherein the platform comprises a seat for a human operator.

10. A vehicle according to any preceding claim, wherein the vehicle is a robotic vehicle for storing or retrieving a storage container is an automated storage and retrieval system, the robotic vehicle comprising:
a cantilever element extending from the vehicle body substantially parallel to the grid of rails and a gripping device for gripping a storage container, wherein the gripping device is configured to be raised or lowered from the cantilever element; and/or
an internal cavity within the vehicle body and a gripping device for gripping a storage container, wherein the gripping device is configured to be raised or lowered from the internal cavity.

11. A vehicle according to any preceding claim, wherein each continuous track of the first set of continuous tracks and/or the second set of continuous tracks comprises either:
a plurality of wheels and a belt forming a loop around the plurality of wheels, wherein the tread is an outer surface of the belt; or
a roller, wherein the tread is a circumferential roller surface of the roller.

12. An automated storage and retrieval system comprising:
a plurality of vertical frame members;
a grid of rails arranged across the vertical frame members, wherein the grid of rails defines access openings for lifting and lowering a storage container through the grid of rails; and
a vehicle according to any preceding claim arranged to traverse the grid of rails.

13. A method of controlling a vehicle according to any of claims 1 to 11, the method comprising:
driving the first set of continuous tracks such that the one or more first protrusion bears onto a rail arranged perpendicular to the first direction, thereby pulling the vehicle in the first direction across the grid of rails; and/or
driving the second set of continuous tracks such that the one or more second protrusion bears onto a rail arranged perpendicular to the second direction, thereby pulling the vehicle in the second direction across the grid of rails.

14. A method according to claim 13, wherein the method comprises:
simultaneously driving the first set of continuous tracks and the second set of continuous tracks to move the vehicle in a third direction, wherein third direction is between the first direction and the second direction.

15. A computer-readable medium comprising instructions which, when executed by a processor of a device, cause a vehicle according to any of claims 1 to 11 to perform a method according to claim 13 or 14.
